Europäisches Patentamt

(19) European Patent Office

Office européen des brevets

(11) Publication number: **0 063 632**
**B1**

## (12) EUROPEAN PATENT SPECIFICATION

(45) Date of publication of patent specification: **05.12.84**

(21) Application number: **81103237.4**

(22) Date of filing: **29.04.81**

(51) Int. Cl.³: **F 02 B 31/00, F 02 M 35/10**

(54) Intake device for internal combustion engines.

(43) Date of publication of application:
**03.11.82 Bulletin 82/44**

(45) Publication of the grant of the patent:
**05.12.84 Bulletin 84/49**

(84) Designated Contracting States:
**DE GB IT**

(56) References cited:
**GB-A-1 211 855**
**GB-A-2 011 537**
**US-A-4 194 474**
**US-A-4 244 333**

**Patents Abstracts of Japan Vol. 3, No. 116, 27 September 1979, page 78M74**
**Patents Abstracts of Japan Vol, 4. No. 158, 5 November 1980, page 13M39**

(73) Proprietor: **Yamaha Motor Co., Ltd.**
**2500 Shingai**
**Iwata-shi Shizuoka-ken (JP)**

(72) Inventor: **Sugiyama, Keiichi**
**2069 Asana, Asaba-cho**
**Iwata-gun, Shizuoka-ken (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

## Description

The invention relates to an intake device for internal combustion engines of the type as indicated in the pre-characterising clause of claim 1.

An intake device of this type is shown in US—A—4,194,474.

In this intake device the downstream discharge port of the auxiliary intake pipe comprises a nozzle located in the vicinity of a main intake port which is directed toward the combustion chamber. Said discharge port and the associated nozzle are disposed at a different angle from the main intake passage at said main intake port. Therefore, a charge issuing from the auxiliary intake passage enters the engine's combustion chamber at a different angle from the charge entering from the main port.

In intake devices of the above type the auxiliary intake pipe has a small effective area and by means of a thin and high speed auxiliary intake flow injected from said auxiliary intake pipe, improved combustion conditions in the combustion chamber can be obtained.

Combustion chambers which are used in connection with auxiliary intake pipes of the above type have their vertical walls extending in parallel with the cylinder axis of the internal combustion engine. As outlined in the foregoing, said auxiliary intake pipes protrude into the intake passage and if one of the afore-mentioned vertical combustion chamber walls happens to be located in front of the injection direction, the auxiliary intake air flow injected from said auxiliary intake pipe impinges upon said vertical combustion chamber wall resulting in a scattering of said intake air flow so that the desired high speed swirl in the combustion chamber cannot be established.

From JP—A—5491612 there is known a suction device of direct injection type diesel engine which comprises within the main suction passage a small-diameter auxiliary suction passage whose end is bent into the intake passage. This suction device suffers from the disadvantage that the intake resistance is increased by said auxiliary intake pipe which is bent into the intake passage. JP—A—5491612 discloses for producing turbulence and promote burning in a combustion chamber the stirring of three differently orientated flows within the combustion chamber.

The invention as claimed is intended to remedy the drawbacks of the prior art. It solves the problem of how to design an intake device for internal combustion engines such that a high speed swirl can be·established in the air-fuel mixture in the combustion chamber even if a vertical combustion chamber wall is located in front of the auxiliary intake air outlet.

According to the invention, to the upper wall of the auxiliary intake pipe there is attached a deflector of spoon-like or tongue-like shape, to deflect·the air flow from said auxiliary intake pipe so that it may not impinge upon the walls of the combustion chamber.

Preferred embodiments of the present invention are defined in the dependent claims.

The advantages offered by the present invention are mainly that the auxiliary air flow is deflected downwardly when passing the inventive deflector so that instantly an intensive swirl is established at the cylinder axis without impinging upon the walls of the combustion chamber (cylinder head). Since the auxiliary air flow is deflected by the inventive deflector provided at the leading end of the auxiliary intake pipe, there can be obtained an effect that the increase in the intake resistance can be reduced, as compared with intake devices of the type in which the auxiliary intake pipe is bent or crushed into the intake passage. Moreover, since the deflector is disposed in the vicinity of the leading end of the auxiliary intake pipe, there can be obtained another effect in that the injection port of the auxiliary intake pipe is located in the vicinity of the intake valve so that the auxiliary intake flow is not blocked from passing through the opened clearance of the intake valve even if it is relatively high-deflected.

One way of carrying out the invention is described in detail below with reference to drawings which illustrate only one specific embodiment, in which:

Fig. 1 is a schematic side view showing an intake assembly in partial section.

Fig. 2 is a section taken along line II—II of Fig. 1,

Fig. 3 is a perspective view showing the leading end of an auxiliary intake pipe which is located in the vicinity of an intake valve,

Fig. 4a is a detailed side view showing the leading end of the auxiliary intake pipe and

Fig. 4b is a front view of the leading end shown in Fig. 4a.

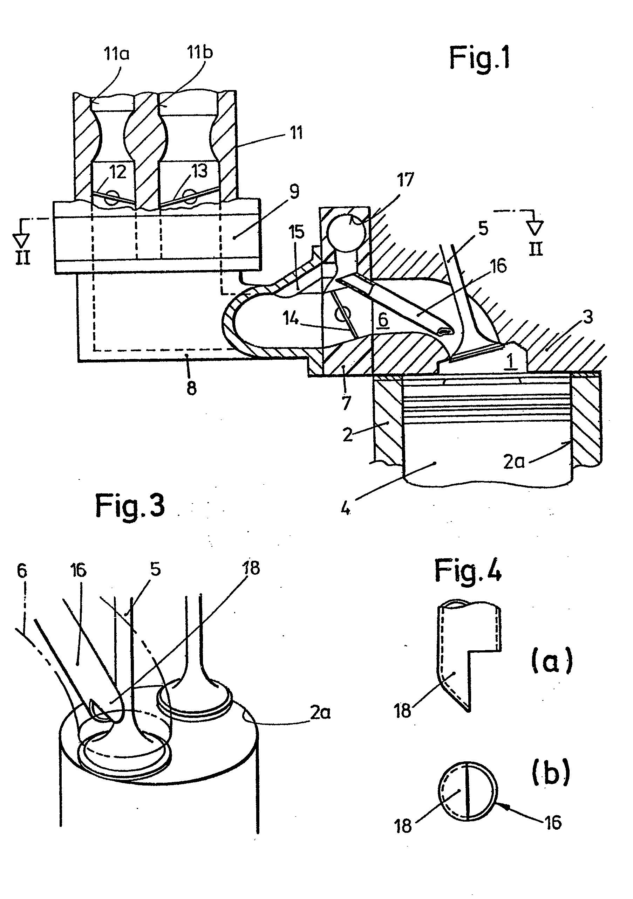

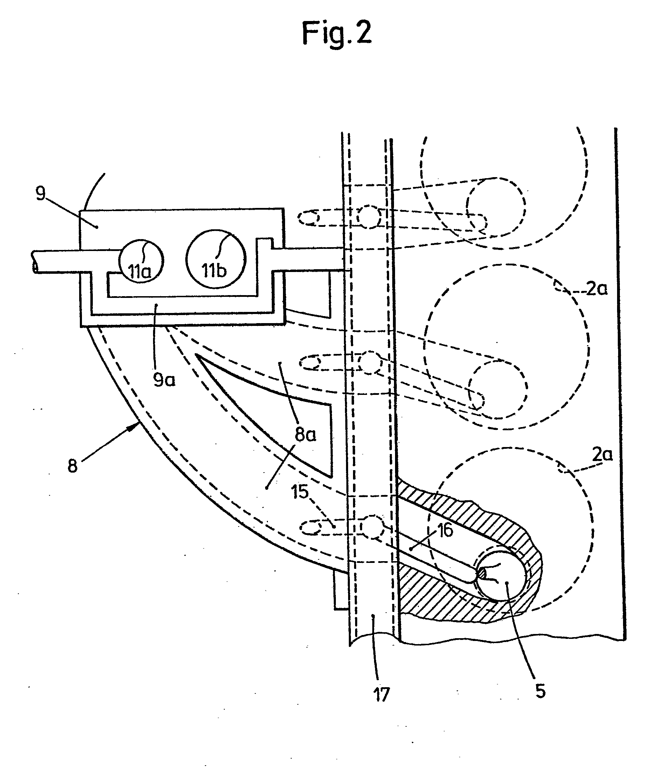

As shown in Figs. 1 and 2 the inventive intake device is associated with a combustion chamber 1 of bath tub shape. Said combustion chamber is defined by a cylinder 2 having a vertical inner cylinder wall 2a, a cylinder head 3 and a piston 4. An intake passage 6 leading to the combustion chamber 1 through an intake valve 5 has communication with the atmosphere through a valve housing 7 attached to the cylinder head 3, an intake manifold 8, an insulator 9 and a carburettor 11. This carburettor 11 is of well-known type and is equipped with two throttle valves, namely an operator operated throttle valve 12 in the carburettor primary passage 11a and an automatic throttle valve 13 in the carburettor secondary passage 11b. The construction thus far described is substantially similar to that of the well-known intake assemblies except valve housing 7.

Within intake passage 6 a control valve 14 is provided which is made cooperative with the operator operated throttle valve 12 but is opened with a slight delay as compared to said throttle valve 12. Control valve 14 is however fully opened substantially simultaneously with throttle valve 12.

The intake passage 6 is branched between the throttle valves 12 and 13 and the control valve 14, i.e., at the branches 8a (Fig. 2) of the manifold 8, thereby forming auxiliary intake passages 15. These auxiliary intake passages 15 have their downstream sides formed into auxiliary intake pipes 16 which are press-fitted in and supported by the valve housing 7. Reference numeral 17 indicates a balancing passage which establishes communication between the auxiliary intake passages of the respective cylinders and which acts as a distributing passage 9a for EGR gases (*exhaust gas return*). Each of the injection ports, that is, each of the leading ends of the auxiliary intake pipes 16 is provided, as shown in Figs. 3 and 4 with a spoon-shaped or preferably tongue-shaped deflector 18. This deflector 18 is attached to the upper wall of the auxiliary intake pipe 16 thereby to deflect the air flow from that auxiliary intake pipe 16 downwards so that it may not impinge upon the wall of the combustion chamber of the cylinder head 3. The deflector 18 may be formed by an extension of the leading end of the upper wall of that auxiliary intake pipe.

The operation of an internal combustion engine having an intake device as described above will be illustrated in the following. In light load operation of the engine including the idling operation, the control valve 14 is closed so that the intake air is completely fed through the auxiliary intake passages 15. More specifically, when the intake valves 5 are opened, the vacuum in combustion chambers 1 is propagated into the intake passages 6 such that the auxiliary intake air flows in a thin and high speed air flow, which is directed tangentially of cylinder wall 2a, into the combustion chambers 1. The incoming auxiliary intake air flow is deflected downwardly when passing the inventive deflector 18 so that instantly an intensive swirl is established at the cylinder axis without impinging upon the walls of the cylinder head 3.

The inventive intake device is suitable for combustion chambers having a bath tub shape, a wedge shape or the like which has its vertical wall extending in parallel with the cylinder axis.

As has been described hereinbefore the present invention provides an intake device for internal combustion engines in which an auxiliary intake pipe is provided having a small effective sectional area and being directed towards the inside of a combustion chamber. Said auxiliary intake pipe protrudes into the intake passage of the engine so that a high speed swirl may be established in the air-fuel mixture of the combustion chamber by a thin and high speed auxiliary intake flow injected from the auxiliary intake pipe.

## Claims

1. Intake device for internal combustion engines comprising a straight auxiliary intake pipe (16) which protrudes into an intake passage (6) in the vicinity of a combustion chamber (1), characterised in that to the upper wall of said auxiliary intake pipe (16) there is attached a deflector (18) of spoon-like or tongue-like shape, to deflect the air flow from said auxiliary intake pipe so that it may not impinge upon the walls of the combustion chamber (1).

2. Intake device as claimed in claim 1, characterised in that the deflector (18) is formed by an extension of the leading end of the upper wall of said auxiliary intake pipe, to deflect the air flow from said auxiliary intake pipe (16) downwardly so that an intensive swirl is established at the cylinder axis of said combustion chamber (1).

3. Intake device according to claim 1 or claim 2, characterised in that said auxiliary intake pipe (16) is arranged so that the air flow from said auxiliary intake pipe is directed tangentially of the cylinder wall (2a) of the combustion engine.

## Patentansprüche

1. Ansaugvorrichtung für Brennkraftmaschine mit innerer Verbrennung mit einem geraden Hilfs-Ansaugrohr (16), welches in einen Einlaßkanal (6) in der Nähe einer Brennkammer (1) vorsteht, dadurch gekennzeichnet, daß an der oberen Wandung des Hilfs-Ansaugrohres (16) ein Deflektor (18) von löffelförmiger oder zungenförmiger Gestalt befestigt ist, um die aus dem Hilfs-Ansaugrohr ausströmende Luft so umzulenken, daß sie nicht auf die Wandungen der Brennkammer (1) auftrifft.

2. Ansaugvorrichtung nach Anspruch 1, dadurch gekennzeichnet, daß der Deflektor (18) durch eine Verlängerung des vorderen Endes der oberen Wand des Hilfs-Ansaugrohres (16) gebildet ist, um die aus dem Hilfs-Ansaugrohr (16) ausströmende Luft nach unten abzulenken, so daß eine intensive Verwirblung in der Zylinderachse der Brennkammer (1) herbeigeführt wird.

3. Ansaugvorrichtung nach Anspruch 1 oder Anspruch 2, dadurch gekennzeichnet, daß das Hilfs-Ansaugrohr (16) so angeordnet ist, daß die aus dem Hilfs-Ansaugrohr ausströmende Luft tangential zur Zylinderwandung (2a) der Brennkraftmaschine gerichtet wird.

## Revendications

1. Dispositif d'admission pour moteurs à combustion interne comportant un tube auxiliaire rectiligne d'admission (16) qui s'engage dans un conduit d'admission (6) à proximité d'une chambre de combustion (1), caractérisé par le fait qu'un déflecteur (18) en forme de cuillère ou de languette est assujetti à la paroi supérieure dudit tube auxiliaire d'admission (16) en vue de dévier le courant d'air provenant de ce tube auxiliaire d'admission, de façon qu'il ne puisse pas balayer les parois de la chambre de combustion (1).

2. Dispositif d'admission selon la revendication 1, caractérisé par le fait que le déflecteur (18) est formé par un prolongement de l'extrémité frontale de la paroi supérieure du tube auxiliaire d'admission afin de dévier de haut en bas le courant d'air provenant de ce tube auxiliaire d'admission (16), de sorte qu'un tourbillon intensif est engendré dans l'axe du cylindre de la chambre de combustion (1).

3. Dispositif d'admission selon la revendication 1 ou la revendication 2, caractérisé par le fait que le tube auxiliaire d'admission (16) est agencé de manière que le courant d'air provenant de ce tube auxiliaire d'admission soit dirigé tangentiellement à la paroi cylindrique (2a) du moteur à combustion.

Fig.1

Fig.3

Fig.4

(a)

(b)

## Fig.2